# EUROPEAN PATENT APPLICATION

(11) **EP 3 115 727 A1**
(43) Date of publication of application: **11.01.2017**
(21) Application number: 14884770.0
(22) Date of filing: 05.03.2014
(51) Int. Cl.: F28D 9/04, F28F 3/08, F28F 3/12

(54) **HEAT EXCHANGER AND METHOD FOR MANUFACTURING HEAT EXCHANGER**

(71) Applicant: The Chugoku Electric Power Co., Inc., Hiroshima-shi, Hiroshima 730-8701 (JP); Hiroshima University, Hiroshima 739-8511 (JP); Toyo Koatsu Co., Ltd., Hiroshima 733-0022 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP); MATSUMURA, Yukihiko, Higashihiroshima-shi Hiroshima 739-8511 (JP); KAWAI, Yoshifumi, Hiroshima-shi Hiroshima 734-0001 (JP); NOGUCHI, Takashi, Hiroshima-shi Hiroshima 733-0002 (JP)
(74) Representative: Osha Liang
(86) International application number: PCT/JP2014/055693
(87) International publication number: WO 2015/132920

(57) **Abstract**

A heat exchanger includes: a flow passage unit arranged with a plurality of planar flow passage bodies each arranged with two flow passages adjacent to each other in a same plane, the plurality of the planar flow passage bodies being layered in an intersecting direction that intersects with the plane, and in two of the planar flow passage bodies adjacent in the intersecting direction of the plurality of the layered planar flow passage bodies, each one of two flow passage ports in both ends of each of the flow passages of one of the planar flow passage bodies is connected to each one of two flow passage ports in both ends of each of the flow passages of another of the planar flow passage bodies; and a high-pressure pipe that covers an outside of the flow passage unit.

## Description

### Technical Field

The present invention relates to heat exchangers, and methods to manufacture a heat exchanger.

### Background

There is known, for example, a heat exchanger using a double tube in which a first helical elongated protrusion is formed in a winding manner to an inner tube, a second helical elongated protrusion that matches with the first helical elongated protrusion is formed to an outer tube, the inner tube and the outer tube contact each other in only the inner surface of the second helical elongated protrusion and the outer surface of the first helical elongated protrusion, and in the other surfaces are opposed and form a helical flow passage between such surfaces (for example, refer to PTL 1).

### Citation List

### Patent Literature

PTL 1: Japanese Patent Application Laid-open Publication No.2012-193869

### Summary

### Technical Problem

With the above-described double tube, a flow passage formed between an inner tube and an outer tube is narrow and the inside of the inner tube is formed to be wide. Thus, there is a problem that the flow passage formed between the inner tube and the outer tube may easily become clogged with such as lumps of inorganic material. Further, the inside of the inner tube has a low velocity, so that there is a problem that such as the lumps of inorganic material do not flow easily and may easily be deposited or accumulated. In other words, there is a possibility that the flow passage between the inner tube and the outer tube and the flow passage inside the inner tube is obstructed.

The present invention has been made in view of the above matters, and this invention aims to provide a heat exchanger in which solids do not easily precipitate or accumulate in the flow passage, and a method to manufacture a heat exchanger.

### Solution to Problem

The present invention to achieve the above-described object is a heat exchanger including:
a flow passage unit
   arranged with a plurality of planar flow passage bodies each arranged with two flow passages that are curved and bent and adjacent to each other in a same plane, the plurality of the planar flow passage bodies being layered in an intersecting direction that intersects with the plane, and
   in two of the planar flow passage bodies adjacent in the intersecting direction of the plurality of the layered planar flow passage bodies, each one of two flow passage ports in both ends of each of the flow passages of one of the planar flow passage bodies is connected to each one of two flow passage ports in both ends of each of the flow passages of another of the planar flow passage bodies; and
a high-pressure pipe that covers an outside of the flow passage unit.

According to such a heat exchanger, the flow passage unit that is inserted along an intersecting direction into the high-pressure pipe and covered with the high-pressure pipe is arranged such that the plurality of the planar flow passage bodies, including two flow passages adjacent in a plane intersecting the intersecting direction, are layered in the intersecting direction, and the flow passages of the adjacent planar flow passage bodies are connected to form two flow passages as a whole. Thus, the cross-sectional area of the flow passage can be made smaller than, for example, the case of forming a heat exchanger including a double pipe in the high-pressure pipe. Thus, a high flow velocity can be ensured in each of the flow passages, and solids in the flow passages can be prevented from depositing or accumulating. Further, the two flow passages are arranged in an adjacent manner, and by making a high-temperature fluid flow in one flow passage and making a low-temperature fluid flow in the other flow passage, heat exchange can be performed more efficiently. Further, because the fluid unit made of two flow passages is provided in the high-pressure pipe, it is more suitable as a heat exchanger that exchanges heat using a high-pressure fluid, for example.

The heat exchanger, wherein preferably
the planar flow passage body is a spiral flow passage body arranged alternately with the two flow passages in a diameter direction of a spiral formed with the two flow passages, the two flow passages spreading from a center side to an outer circumference side and curving spirally in a same direction shifted in phase by halfway from each other, and
the flow passage unit is arranged with a plurality of the spiral flow passage bodies layered in the intersecting direction that intersects the plane, and the flow passage ports to the center side of the two spiral flow passage bodies adjacent in the intersecting direction are connected to each other or the flow passage ports to the outer circumference side of the two spiral flow passage bodies adjacent in the intersecting direction are connected to each other to form two continuous flow passages.

With such a heat exchanger, the two flow passages included in the planar flow passage body is curved spirally winding in one direction, and the two flow passages are alternately arranged in the diameter direction of the spiral, thus a boundary section between the two flow passages, namely, a heat-transfer surface, can be more widely secured. Thus, heat exchange can be performed more efficiently.

Further, with the flow passage unit, the plurality of the spiral flow passage bodies are layered in the intersecting direction and connected to form two flow passages, and consequently the two flow passages are sufficiently longer than the length of the high-pressure pipe to be substantially the entire length of the heat exchanger. Thus, heat exchange can be performed more efficiently.

The heat exchanger, wherein preferably, in the flow passage unit, the spiral flow passage bodies are layered such that a winding direction of the adjacent spiral flow passage bodies are the same.

With such a heat exchanger, two flow passages can be arranged such that the flow passage in which a high-temperature fluid flows through and the flow passage in which a low-temperature fluid flows through do not contact each other in the intersecting direction.

The heat exchanger, wherein in the flow passage unit, the spiral flow passage bodies may be layered such that winding directions of the adjacent spiral flow passage bodies are opposite to each other.

With such a heat exchanger, there is a section where the flow passage through which a high-temperature fluid passes and the flow passage through which a low-temperature fluid passes come into contact in the intersecting direction, and so the heat-transfer area can be further widened.

Further, a method to manufacture a heat exchanger includes:
partition material forming to form a plurality of partition materials forming a partition of a recess that is connected and formed to both surfaces of a metallic plate material, the plurality of the partition materials including an opening in one end part of the recess;
plate material forming to form a plurality of metallic plate materials, the plurality of the metallic plate materials including a plane that opposes the partition material, the plurality of the metallic plate materials forming a flow passage by covering the recess of the partition material, the plurality of the metallic plate materials including an opening in an end part to an opposite side of an end part provided with the opening of the formed flow passage;
flow passage unit forming to form a flow passage unit by
arranging alternately the partition material and the plate material,
adjusting and integrally fixing positions of the openings provided in the partition material and the plate material such that flow passages provided in one side of the partition material are connected to each other and flow passages provided in another side of the partition material are connected to each other; and
integrating to integrate by inserting the flow passage unit along the intersecting direction in a high-pressure pipe and covering an outside of the flow passage unit with the high-pressure pipe.

With such a method to manufacture a heat exchanger, two flow passages formed with a partition material and two plate materials share the plate materials and the partition material and the plate material are alternately arranged, the partition material forming a partition of connected recesses, the two plate materials being adjacent in the intersecting direction of the partition material. Accordingly, there is only one dividing plate between the two flow passages dividing the two flow passages. Thus, it is possible to increase heat-conductive efficiency than in the case where the two tubes are placed adjacent to each other. Further, the flow passage unit is easily formed by alternately arranging the partition material and the plate material, and adjusting and integrally fixing the positions of the openings provided to the partition material and the plate materials such that the flow passages provided to one side of the partition material are connected to each other and that the flow passages provided to the other side of the partition material are connected to each other. Further, the formed flow passage unit is inserted in and integrated with the high-pressure pipe, to easily form the heat exchanger.

The method to manufacture a heat exchanger, wherein preferably
the partition material and the plate material are formed by a drawing process,
an outer circumferential part of the partition material and the plate material, which are adjacent to each other, are bent in a direction that intersects with the plane, and
the partition material and the plate material are layered and joined in a section where the partition material and the plate material are bent in the direction that intersects with the plane.

With such a method to manufacture a heat exchanger, the partition material and the plate material can be easily formed with a drawing process, and because the partition material and the plate material are to be layered and joined in a section bent in a direction intersecting the plane, the outer circumference side is sealed hermetically and two flow passages can be easily formed without using tubes.

### Advantageous Effects of Invention

According to this invention, it is possible to provide a heat exchanger in which solids do not easily clog, deposit, or accumulate in the flow passage, and a method to manufacture such a heat exchanger.

### Brief Description of Drawings

[Fig. 1] Fig. 1 is a schematic view showing a heat exchanger according to the present invention.
[Fig. 2] Fig. 2 is a schematic view showing a planar flow passage body and a flow passage unit provided to a heat exchanger of this invention.
[Fig. 3] Fig. 3 is a schematic view showing a method to manufacture a heat exchanger of this invention.
[Fig. 4] Fig. 4 is a view describing a secondary flow.

### Description of Embodiments

As an embodiment of the present invention, for example, a heat exchanger of a fluid at high temperature and high pressure, which is used in a water-containing biomass supercritical water gasifier, is described below as an example.

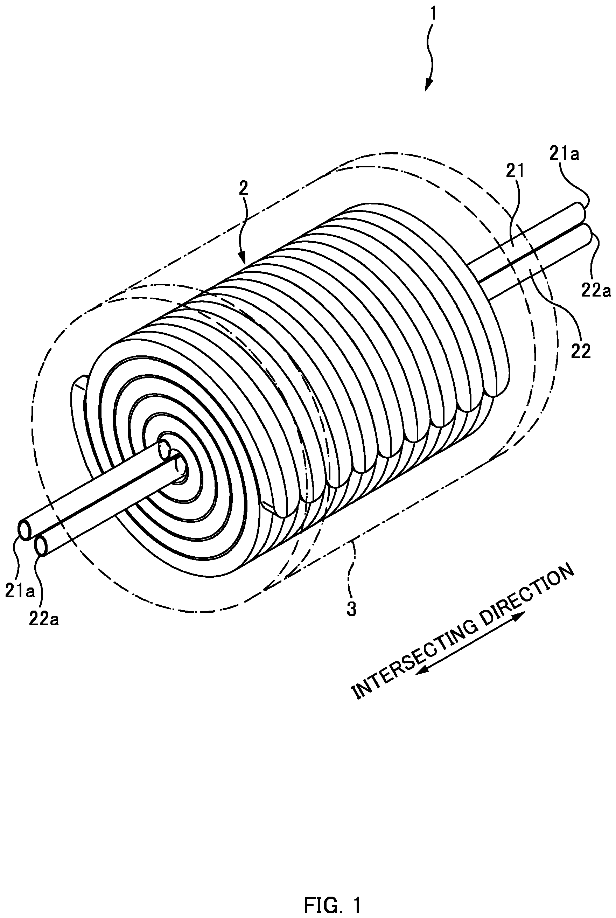

The heat exchanger 1 of the present embodiment includes, as shown in Fig. 1, a flow passage unit 2 arranged with two continuous flow passages 21, 22 that are bent in an adjacent manner with each other, and a cover 3 that covers the flow passage unit 2 with end part openings 21a, 22a, which are to be ends of the two continuous flow passages 21, 22 of the flow passage unit 2, protruded to the outside. In Fig. 1, in order to show the flow passage unit 2, the cover 3 is shown in virtual lines (dot-and-dash lines).

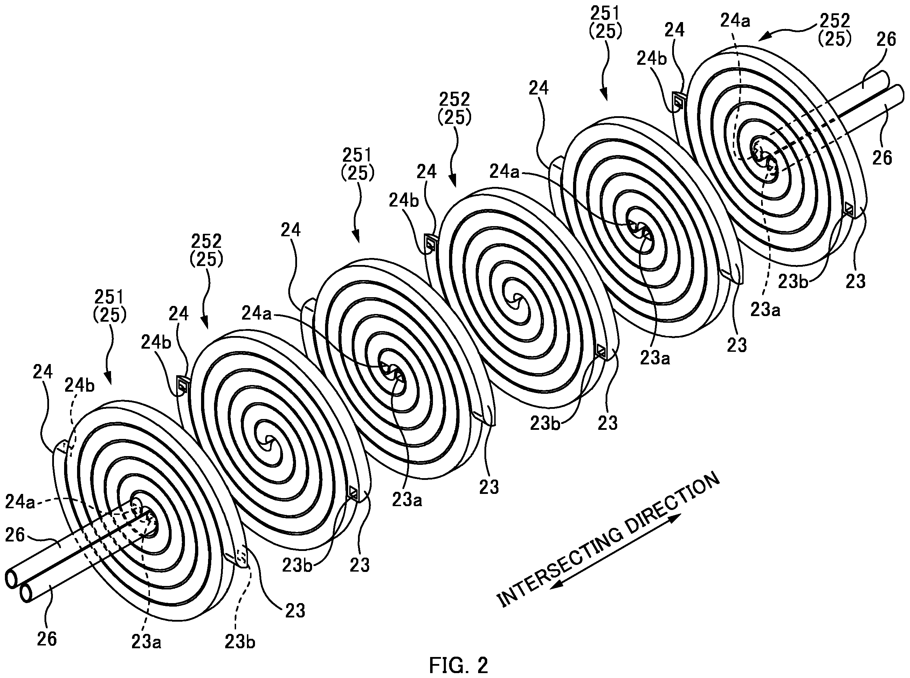

As shown in Fig. 2, the flow passage unit 2 has a plurality of spiral flow passage bodies 25 as a planar flow passage body in which two spiral flow passages 23, 24, are adjacent in a same plane and bent spirally.

In each spiral flow passage body 25, each of the two spiral flow passages 23, 24 spreads from the center side to the outer circumferential side and curves spirally winding in the same direction shifted in phase by halfway from each other, and the two spiral flow passages 23, 24 are alternately arranged in the diameter direction of a spiral made by the two spiral flow passages 23, 24. Thus, flow passage ports 23a, 23b, 24a, 24b, to be both ends of the spiral flow passages 23, 24, are provided to each of the center and the outer circumference of the spiral flow passage bodies 25. In this embodiment, the spiral flow passages 23, 24 of each spiral flow passage body 25 correspond to flow passages, and the two flow passages 21, 22 in which the spiral flow passages 23, 24 of the plurality of the spiral flow passages 25 are connected correspond to the continuous flow passages.

In Fig. 2, for the sake of explanation, each spiral flow passage 23, 24 is shown as one tube, but the spiral flow passages 23, 24 may be divided spaces, and for example, the two spiral flow passages 23, 24 may be divided with a single dividing material.

The plurality of the spiral flow passage bodies 25 are arranged layered in a direction intersecting a plane in which the two spiral flow passages 23, 24 are arranged and formed (hereinafter, referred to as an intersecting direction). Then, the spiral flow passage bodies 25 are arranged layered so that the winding direction of each spiral flow passage body is in the same direction. In the description below, a surface facing left lower side in Fig. 2 of the layered plurality of the spiral flow passage bodies 25 is described as a front surface and a surface to the opposite side is described as a rear surface.

As shown in Fig. 2, with the flow passage unit 2 in which the plurality of the spiral flow passage bodies 25 are layered, a first spiral flow passage body 251 and a second spiral flow passage body 252 are alternately arranged. In the first spiral flow passage body 251, the center side flow passage ports 23a, 24a to be end parts to the center side of the two spiral flow passages 23, 24 are provided to the front surface side, and the outer circumference side flow passage ports 23b, 24b to be end parts to the outer circumference side are provided to the rear surface side. In the second spiral flow passage body 252, the center side flow passage ports 23a, 24a, to be end parts to the center side of the two spiral flow passages 23, 24, are provided to the rear surface side, and the outer circumference side flow passage ports 23b, 24b, to be end parts to the outer circumference side, are provided to the front surface side.

The plurality of the spiral flow passage bodies 25 that are layered are arranged such that the center side flow passage ports 23a, 24a of the two spiral flow passage bodies 251, 252 adjacent in the intersecting direction are connected to each other or the outer circumference side flow passage ports 23b, 24b of the two spiral flow passage bodies 251, 252 are connected to each other. The center side flow passage ports 23a, 24a and the outer circumference side flow passage ports 23b, 24b are sealed hermetically to each other, and the whole of the plurality of the spiral flow passage bodies 25 form the two continuous flow passages 21, 22.

With the layered spiral flow passage bodies 25, of the flow passage ports 23a, 23b, 24a, 24b in the spiral flow passage bodies 25 arranged at both ends, the flow passage ports 23a, 23b, 24a, 24b, open to a side in which an adjacent spiral flow passage body 25 is not provided, are each provided with a communicating tube 26 that connects to the outside. In the example shown in Fig. 1, the communicating tube 26 is provided to each of the center side flow passage ports 23a, 24a, of the spiral flow passage bodies 251, 252 arranged at both ends of the flow passage unit 2.

As shown in Fig. 1, the cover 3 includes a high-pressure pipe 31 containing the fluid unit 2, and lids 32 to be provided to close both ends of the high-pressure pipe 31. The high-pressure pipe 31 has a length substantially the same as the length of the layered section of the spiral flow passage bodies 25 in the flow passage unit 2 in the intersecting direction. The lid 32 includes openings through which the communicating tubes 26 are passed through, and has an outer diameter that is substantially the same as the diameter of the high-pressure pipe 31, and an outer circumferential edge of the lid 32 is welded to the end part of the high-pressure pipe 31.

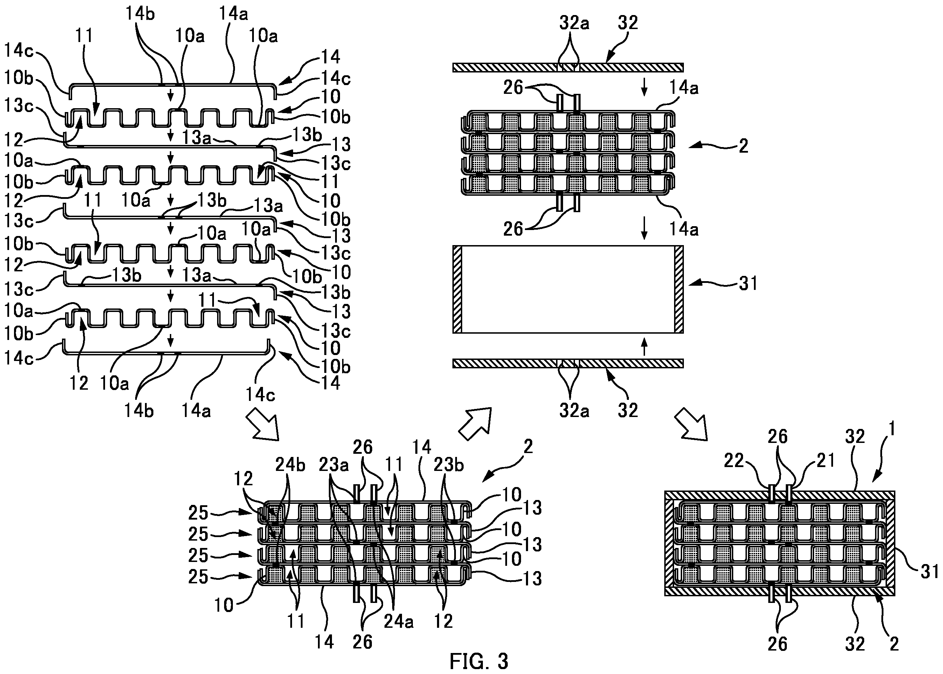

The heat exchanger 1 configured as above is manufactured as shown in Fig. 3, for example. In this embodiment, the heat exchanger 1 including four spiral flow passage bodies 25 will be described.

The flow passage unit 2 in this embodiment is formed by alternately layering a recess forming plate material 10 as a partition material having spiral recesses 11, 12 as shown in Fig. 3, and a planar plate material 13 including a planar part 13a covering the recesses 11, 12 formed in the recess forming plate material 10, and then layering and integrating end part plate materials 14 that cover the recesses 11, 12 of the recess forming plate material 10 in both ends of the flow passage unit 2. In other words, the spiral flow passage body 25 is formed by bonding two planar plate materials 13 to both sides of one recess forming plate material 10, or by bonding the planar plate material 13 and the end part plate material 14. Then, the adjacent spiral flow passage bodies 25 are configured by sharing the planar plate material 13 arranged between the recess forming plate materials 10 included in each of the spiral flow passage bodies 25. Here, two planar plate materials 13 bonded to both sides of one recess forming plate material 10, or the planar plate material 13 and the end part plate material 14 correspond to the two plate materials.

In a method to manufacture the heat exchanger 1, first, recess forming plate materials 10, planar plate materials 13, and end part plate materials 14 are formed by a drawing process to metal plate material that is heat-resistant and heat-conductive. At this time, the planar plate materials 13 and the end part plate materials 14 do not necessarily have to be heat-conductive. Further, the recess forming plate materials 10, the planar plate materials 13, and the end part plate materials 14 are formed in advance with openings 10a, 13b, 14b, in sections to be the flow passage ports 23a, 23b, 24a, 24b. It should be noted that, in Fig. 3, the openings 10a, 13b, 14b, and the flow passage ports 23a, 23b, 24a, 24b, are shown by black rectangles, and hatching that shows cross-sections of the recess forming plate materials 10, the planar plate materials 13, and the end part plate materials 14 have been omitted.

The recess forming plate material 10 is formed on a front and a rear surface of a plate material such that each of the spiral recesses 11, 12, spread from the center side to the outer circumference side and are shifted in phase by halfway from each other and curve spirally in the same direction. At this time, an outer circumferential part is bent back along the intersecting direction in which the plurality of the spiral flow passage bodies 25 are layered to form a bent part 10b.

The planar plate material 13 is bent at approximately 90 degrees in an outer circumferential end part of the planar part 13a covering the recesses 11, 12 of the recess forming plate material 10, and a bent part 13c is formed to be layered on the bent back bent part 10b of the outer circumference of the adjacent recess forming plate material 10 when the planar plate material 13 is layered on the recess forming plate material 10.

The end part plate material 14 also has a planar part 14a covering the recesses 11, 12 of the recess forming plate material 10 arranged to both end sides of the flow passage unit 2. The outer circumferential end part of the planar part 14a is curved approximately 90 degrees, and a bent part 14c is formed by bending an outer circumferential end part of the planar part 14a approximately 90 degrees. The bent part 14c is formed so as to layer on the bent back bent part 10b of the outer circumference of the recess forming plate material 10 when the end part plate material 14 is layered on the recess forming plate material 10 in both end sides of the flow passage unit 2, and to layer on a plane intersecting the planar part 14a in the outer circumference of the recess forming plate material 10.

Next, the flow passage unit 2 is formed by alternately layering the formed recess forming plate material 10 and the planar plate material 13, layering the end part plate material 14 in both end parts, welding the outer circumferential section along the entire periphery of the adjacent recess forming plate material 10 and the planar plate material 13 or the end part plate material 14, and welding the communicating tubes 26 to the center side flow passage ports 23a, 24a of the end part plate material 14. At this time, the recess forming plate material 10, the planar plate material 13 and the end part plate material 14 are arranged such that the flow passage ports 23a, 23b, 24a, 24b of adjacent members when layered are opposed to each other, and two connected continuous flow passages 21, 22 will be formed when the flow passage unit 2 is formed.

Next, the formed flow passage unit 2 is inserted to contact an inner peripheral surface of the high-pressure pipe 31. At this time, the planar part 14a of the end part plate material 14 in both ends of the flow passage unit 2 approximately match both edges of the high-pressure pipe 31, and the communicating tubes 26 are arranged to protrude from the edges of the high-pressure pipe 31.

Finally, the lid 32 provided with through holes 32a for the communicating tubes 26 is each arranged to the end parts of the high-pressure pipe 31, and the end edge of the high-pressure pipe 31 and the outer circumference of the lid 32 are welded over the entire circumference to complete the heat exchanger 1 provided with two continuous flow passages 21, 2.

With the heat exchanger 1 of this embodiment, for example, a low temperature raw material to be gasified is made to flow through inside one continuous flow passage 21 in a predetermined direction, and high-temperature treatment water that flows out from a gasification reactor provided in the water-containing biomass supercritical water gasifier flows inside the other continuous flow passage 22 in an opposite direction to the raw material to be gasified. In other words, inside the flow passage unit 2, the raw material to be gasified and the treatment water flow through the two continuous flow passages 21, 22, in opposite directions to each other. In this way, by making the raw material to be gasified and the treatment water flow through, heat exchange is performed between the two continuous flow passages 21, 22, with the recess forming plate material 10 dividing the two continuous flow passages 21, 22 as a heat-transfer surface.

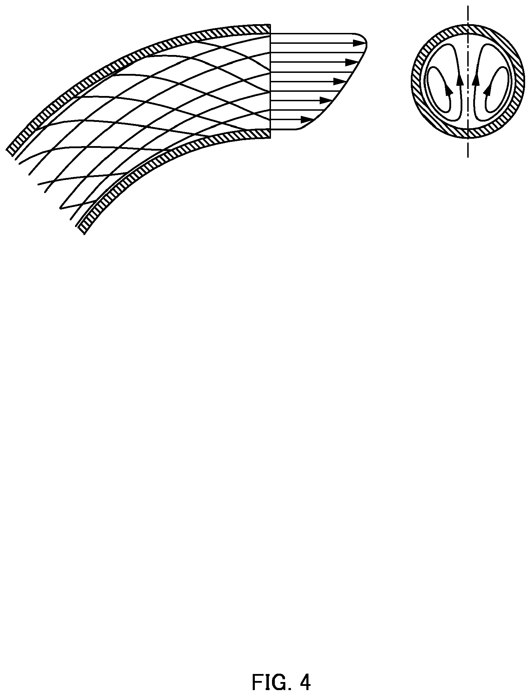

In this embodiment, a low temperature raw material to be gasified is made to flow through one continuous flow passage 21, and high temperature treatment water is made to flow through the other continuous flow passage 22, thus while the raw material to be gasified is rising in temperature, the raw material to be gasified is mixed with a secondary flow inside the flow passage bent spirally, and activated carbon, which is a gasification catalyst that is suspended in the raw material to be gasified, and biomass are mixed and homogenized. Further, when the activated carbon and the biomass are mixed, the contacting rate of the catalyst and biomass improves, to increase the catalyst effect. It should be noted that the secondary flow is a flow that occurs in the helical tube, as shown in Fig. 4.

With the heat exchanger 1 of this embodiment, the flow passage unit 2 that is inserted in along the intersecting direction and covered with the high-pressure pipe 31 is arranged so that the plurality of the spiral flow passage bodies 25 each having two adjacent spiral flow passages 23, 24 in the plane intersecting the intersecting direction, are layered in the intersecting direction, and the spiral flow passages 23, 24 of the adjacent spiral flow passage bodies 25 are connected to form two continuous flow passages 21, 22 as a whole. Thus, for example, the sectional area of the flow passages can be made smaller than the case in which a heat exchanger is formed including a double pipe in a high-pressure pipe 31. Thus, a fast flow velocity in each of the continuous flow passages 21, 22 can be ensured, and solids can be prevented from depositing or accumulating inside the continuous flow passages 21, 22.

Further, the two continuous flow passages 21, 22 are arranged in an adjacent manner, and so by making a high temperature fluid flow through in either one of the continuous flow passages 21, 22 and making a low temperature fluid flow through in the other flow passage 21, 22, heat exchange can be performed more efficiently. Further, the flow passage unit 2 formed with two continuous flow passages 21, 22 is provided inside the high-pressure pipe 31, and thus, the above is more suitable as a heat exchanger 1 of such as a system including a water-containing biomass supercritical water gasifier that exchanges heat using a high pressure fluid, for example.

Further, by making two spiral flow passages 23, 24 provided to the spiral flow passage body 25 spirally curve to wind in the same direction, the two spiral flow passages 23, 24 are alternately arranged in the diameter direction of the spiral, and boundary sections of the two spiral flow passages 23, 24, namely a heat-transfer surface, can be more widely ensured. Thus, heat exchange can be performed more efficiently.

Further, the flow passage unit 2 is made by layering and connecting a plurality of the spiral flow passage bodies 25 in the intersecting direction and forming two continuous flow passages 21, 22, thus the two continuous flow passages 21, 22 become sufficiently longer than the length of the high-pressure pipe 31 which is substantially the entire length of the heat exchanger 1, thus heat exchange can be performed more efficiently.

Further, the two continuous flow passages 21, 22 can be arranged so that the continuous flow passage 21 in which high temperature treatment water flows through and the continuous flow passage 22 in which a low temperature raw material to be gasified flows through do not contact each other in the intersecting direction.

Further, according to the method to manufacture the heat exchanger 1 of this embodiment, the two spiral flow passages 23, 24 are formed with the recess forming plate material 10 that forms partitions of the connected recesses 11, 12, and two planar plate materials 13 adjacent in the intersecting direction of the recess forming plate material 10, or the planar plate material 13 and the end part plate material 14. The two spiral flow passages 23, 24 share the planar plate material 13 and the recess forming plate material 10 and the planar plate material 13 are alternately arranged, thus there is only one recess forming plate material 10 as a dividing plate between the two continuous flow passages 21, 22. Accordingly, heat conduction efficiency can be increased than in the case where two tubes are made adjacent to each other.

Further, the flow passage unit 2 is easily formed by alternately arranging the recess forming plate material 10 and the planar plate material 13, and adjusting and integrally fixing positions of the openings 13a, 13b, 14b provided in the recess forming plate material 10 and the planar plate material 13 such that the recesses 11 provided to one side of the recess forming plate material 10 are connected to each other and the recesses 12 provided to the other side of the recess forming plate material 10 are connected to each other. Further, the formed flow passage unit 2 is inserted in and integrated with the high-pressure pipe 31, to easily form the heat exchanger 1.

Further, the recess forming plate material 10, the planar plate material 13 and the end part plate material 14 can be more easily formed by the drawing process. The outer circumferential parts of the recess forming plate material 10, the planar plate material 13 and the end part plate material 14, which are alternately arranged in the intersecting direction are layered and joined in a plane intersecting the planar parts 13a, 14a, with such as the bent part 10b, the bent part 13c, the bent part 14c and the outer circumferential part of the recess forming plate material 10. Accordingly, the two continuous flow passages 21, 22 can be easily formed by sealing the outer circumferential sides.

In the above embodiment, an example has been described in which the flow passage unit 2 is formed by layering the plurality of the spiral flow passage bodies 25 so that the winding direction of the spiral flow passage bodies 25 is in the same direction, but it is not limited to the above. For example, the flow passage unit may be formed so that the adjacent spiral flow passage bodies 25 are arranged such that the winding direction of the 25 is opposite to each other. With such a heat exchanger, a flow passage in which a high temperature treatment water flows through and a flow passage in which a low temperature raw material to be gasified passes through contact each other in the intersecting direction, and the contacting area increases, thus it is possible to further increase the heat-transfer area. Further, the planar flow passage body is not limited to a spiral shape, as long as two flow passages are provided adjacent to each other and curved and bent in the plane.

In the above embodiment, the heat exchanger 1 is a heat exchanger of a fluid at high temperature and high pressure used in a water-containing biomass supercritical water gasifier, but it is not limited to such.

The above embodiment is to facilitate understanding of this invention, and should not be used to limit interpretation of this invention. The invention may be changed and/or modified, without departing from the gist thereof, and it is needless to say that this invention includes its equivalents.

### Reference Signs List

- 1: heat exchanger,
- 2: flow passage unit,
- 3: cover,
- 10: recess forming plate material,
- 10a: opening,
- 10b: bent part,
- 11: recess,
- 12: recess,
- 13: planar plate material,
- 13a: planar part,
- 13b: opening,
- 13c: bent part,
- 14: end part plate material,
- 14a: planar part,
- 14b: opening,
- 14c: bent part,
- 21: continuous flow passage,
- 21a: end part opening,
- 22: continuous flow passage,
- 23: flow passage,
- 23a: flow passage port,
- 23b: flow passage port,
- 24a: flow passage port,
- 24b: flow passage port,
- 25: spiral flow passage body,
- 26: communicating tube,
- 31: high-pressure pipe,
- 32: lid,
- 32a: through hole,
- 251: spiral flow passage body,
- 252: spiral flow passage body

## Claims

1. A heat exchanger comprising:
a flow passage unit
arranged with a plurality of planar flow passage bodies each arranged with two flow passages that are curved and bent and adjacent to each other in a same plane, the plurality of the planar flow passage bodies being layered in an intersecting direction that intersects with the plane, and
in two of the planar flow passage bodies adjacent in the intersecting direction of the plurality of the layered planar flow passage bodies, each one of two flow passage ports in both ends of each of the flow passages of one of the planar flow passage bodies is connected to each one of two flow passage ports in both ends of each of the flow passages of another of the planar flow passage bodies; and
a high-pressure pipe that covers an outside of the flow passage unit.

2. The heat exchanger according to claim 1, wherein
the planar flow passage body is a spiral flow passage body arranged alternately with the two flow passages in a diameter direction of a spiral formed with the two flow passages, the two flow passages spreading from a center side to an outer circumference side and curving spirally in a same direction shifted in phase by halfway from each other, and
the flow passage unit is arranged with a plurality of the spiral flow passage bodies layered in the intersecting direction that intersects the plane, and the flow passage ports to the center side of the two spiral flow passage bodies adjacent in the intersecting direction are connected to each other or the flow passage ports to the outer circumference side of the two spiral flow passage bodies adjacent in the intersecting direction are connected to each other to form two continuous flow passages.

3. The heat exchanger according to claim 2, wherein
in the flow passage unit, the spiral flow passage bodies are layered such that a winding direction of the adjacent spiral flow passage bodies are the same.

4. The heat exchanger according to claim 2, wherein
in the flow passage unit, the spiral flow passage bodies are layered such that winding directions of the adjacent spiral flow passage bodies are opposite to each other.

5. A method to manufacture a heat exchanger comprising:
partition material forming to form a plurality of partition materials forming a partition of a recess that is connected and formed to both surfaces of a metallic plate material, the plurality of the partition materials including an opening in one end part of the recess;
plate material forming to form a plurality of metallic plate materials, the plurality of the metallic plate materials including a plane that opposes the partition material, the plurality of the metallic plate materials forming a flow passage by covering the recess of the partition material, the plurality of the metallic plate materials including an opening in an end part to an opposite side of an end part provided with the opening of the formed flow passage;
flow passage unit forming to form a flow passage unit by
arranging alternately the partition material and the plate material,
adjusting and integrally fixing positions of the openings provided in the partition material and the plate material such that flow passages provided in one side of the partition material are connected to each other and flow passages provided in another side of the partition material are connected to each other; and
integrating to integrate by inserting the flow passage unit along the intersecting direction in a high-pressure pipe and covering an outside of the flow passage unit with the high-pressure pipe.

6. The method to manufacture a heat exchanger according to claim 6, wherein
the partition material and the plate material are formed by a drawing process,
an outer circumferential part of the partition material and the plate material, which are adjacent to each other, are bent in a direction that intersects with the plane, and
the partition material and the plate material are layered and joined in a section where the partition material and the plate material are bent in the direction that intersects with the plane.
